# EUROPEAN PATENT SPECIFICATION

(11) **EP 4 253 890 B1**
(45) Date of publication and mention of the grant of the patent: **21.05.2025**
(21) Application number: 23165096.1
(22) Date of filing: 29.03.2023
(51) Int. Cl.: F28D 1/04, F28D 1/053, F28D 1/02

(54) **PHASE-CHANGE HEAT EXCHANGER**
PHASENWECHSELWÄRMETAUSCHER
ÉCHANGEUR DE CHALEUR À CHANGEMENT DE PHASE

(30) Priority: 31.03.2022 CN 202210332718
(43) Date of publication of application: 04.10.2023
(73) Proprietor: Sungrow Power Supply Co., Ltd., Hefei, Anhui 230088 (CN)
(72) Inventor: TAN, Lele, Anhui, 230088 (CN); ZHENG, Hao, Anhui, 230088 (CN); WANG, Xiaohu, Anhui, 230088 (CN); SHU, Wentao, Anhui, 230088 (CN); YANG, Ye, Anhui, 230088 (CN)
(74) Representative: Zacco Norway AS

(56) References cited:
- CN-A- 106 524 602
- CN-A- 108 151 176
- CN-U- 203 964 739
- JP-A- H02 117 412
- US-A- 5 925 929
- US-A1- 2017 265 329

## Description

### FIELD

The present application relates to the technical field of heat exchangers, in particular to a phase-change heat exchanger and a heat exchange core having the phase-change heat exchanger.

### BACKGROUND

A conventional aluminum foil heat exchanger has a limited heat transfer efficiency. In contrast, a phase-change heat exchanger has a higher heat transfer efficiency. Since the phase-change heat exchanger is loaded with a phase-change working medium, the heat transfer efficiency can be greatly improved through the phase change of the working medium. Thus, in the practical applications, the phase-change heat exchanger has been getting more and more attentions.

For the phase-change heat exchanger, it generally includes a heat exchange core, which includes an evaporator and a condenser, and the condenser is located above the evaporator. The phase-change working medium inside the evaporator flows to the condenser after heat absorption and vaporization, the vaporized phase-change working medium dissipates heat in the condenser, and the phase-change working medium returns to the evaporator under gravity after being condensed into liquid, in this way, circulating heat dissipation is achieved. However, in the current structure of the heat exchange core of the phase-change heat exchanger, the condenser and the evaporator are generally vertically arranged. The problem of this structure is that the layout of the heat exchange core is unreasonable, and a space of an inner chamber of a housing of the phase-change heat exchanger cannot be fully utilized, which ultimately causes a large overall volume of the phase-change heat exchanger. A phase-change heat exchanger according to the preamble of claim 1 is disclosed in CN 106 524 602 A.

In summary, how to solve the problem of a large overall volume of the phase-change heat exchanger has become an urgent problem for those skilled in the art.

### SUMMARY

In view of this, a phase-change heat exchanger according to claim 1 is provided according to the present invention, so as to solve the problem of a large overall volume of the phase-change heat exchanger.

In order to realize the above object, the following technical solution is provided as follows according to the present application.

A phase-change heat exchanger includes a heat exchange core, and a housing, the heat exchange core comprises an evaporator and a condenser which is in communication with the evaporator and is located above the evaporator, and a preset obtuse angle is formed between the evaporator and the condenser, a separation plate is provided in the housing, an inner chamber of the housing is separated by the separation plate into an inner circulation heat exchange chamber and an outer circulation heat exchange chamber that are not in communication with each other, the heat exchange core is mounted in the inner chamber of the housing, the evaporator of the heat exchange core is located in the inner circulation heat exchange chamber, and the condenser of the heat exchange core is located in the outer circulation heat exchange chamber, and the inner circulation heat exchange chamber and the outer circulation heat exchange chamber are arranged sequentially from bottom to top, and the evaporator is vertically arranged in the inner circulation heat exchange chamber or the condenser is vertically arranged in the outer circulation heat exchange chamber.

In an embodiment, the preset obtuse angle ranges from 100 ° to 170 °.

In an embodiment, the evaporator and the condenser are of split structures which are in a movable connection.

In an embodiment, a communication pipeline between the evaporator and the condenser includes an exhaust pipe and a return pipe, a lower end of the exhaust pipe is connected to an upper end of the evaporator, an upper end of the exhaust pipe is connected to an upper end of the condenser; a lower end of the return pipe is connected to a lower end of the evaporator, and an upper end of the return pipe is connected to a lower end of the condenser.

In an embodiment, the evaporator includes a stack of multiple sub-evaporators, the condenser includes a stack of multiple sub-condensers, and the sub-evaporators are in communication with the sub-condensers in one-to-one correspondence.

In an embodiment, the condenser is arranged close to an air outlet side of the outer circulation heat exchange chamber in a case that the condenser is vertically arranged in the outer circulation heat exchange chamber.

In an embodiment, the evaporator is arranged close to an air outlet side of the inner circulation heat exchange chamber in a case that the evaporator is vertically arranged in the inner circulation heat exchange chamber.

In an embodiment, the inner circulation heat exchange chamber and the outer circulation heat exchange chamber are arranged from left to right, and the evaporator is horizontally arranged in the inner circulation heat exchange chamber or the condenser is horizontally arranged in the outer circulation heat exchange chamber.

Compared with the introduction of the background technology, the heat exchange core of the phase-change heat exchanger includes the evaporator and the condenser which is in communication with the evaporator and is located above the evaporator, and the preset obtuse angle is formed between the evaporator and the condenser. In practical application, by designing the preset obtuse angle between the evaporator and condenser of the heat exchange core, a space in a thickness direction of an inner chamber of a housing of the phase-change heat exchanger can be fully utilized, a span in a connection direction between the evaporator and the condenser can be reduced, and thus an overall volume of the phase-change heat exchanger can be reduced.

In addition, a phase-change heat exchanger is provided according to the present application, which includes a heat exchange core, the heat exchange core is the heat exchange core of the phase-change heat exchanger according to any one of above solutions. Since the heat exchange core of the phase-change heat exchanger has the aforementioned technical effects, the phase-change heat exchanger with the heat exchange core should also have the corresponding technical effects, which is not described here.

In an embodiment, the phase-change heat exchanger further includes a housing, a separation plate is provided in the housing, an inner chamber of the housing is separated by the separation plate into an inner circulation heat exchange chamber and an outer circulation heat exchange chamber that are not in communication with each other, the heat exchange core is mounted in the inner chamber of the housing, the evaporator of the heat exchange core is located in the inner circulation heat exchange chamber, and the condenser of the heat exchange core is located in the outer circulation heat exchange chamber.

In an embodiment, the inner circulation heat exchange chamber and the outer circulation heat exchange chamber are arranged sequentially from bottom to top, and the evaporator is vertically arranged in the inner circulation heat exchange chamber or the condenser is vertically arranged in the outer circulation heat exchange chamber.

In an embodiment, the condenser is arranged close to an air outlet side of the outer circulation heat exchange chamber in a case that the condenser is vertically arranged in the outer circulation heat exchange chamber.

In an embodiment, the evaporator is arranged close to an air outlet side of the inner circulation heat exchange chamber in a case that the evaporator is vertically arranged in the inner circulation heat exchange chamber.

In an embodiment, the inner circulation heat exchange chamber and the outer circulation heat exchange chamber are arranged from left to right, and the evaporator is horizontally arranged in the inner circulation heat exchange chamber or the condenser is horizontally arranged in the outer circulation heat exchange chamber.

In addition, another heat exchange core for mounting into a housing of a phase-change heat exchanger is provided according to the present application. The heat exchange core includes an evaporator and a condenser which is in communication with the evaporator and is located above the evaporator. At least one of the evaporator and the condenser is inclined in the housing. In the actual use, since at least one of the evaporator and the condenser is inclined in the housing, a space in a thickness direction of an inner chamber of a housing of the phase-change heat exchanger can be fully utilized, a span in a connection direction between the evaporator and the condenser can be reduced, and thus an overall volume of the phase-change heat exchanger can be reduced.

In an embodiment, both of the evaporator and the condenser are inclined in the housing.

In an embodiment, the evaporator and the condenser have a same inclining direction and/or a same inclining angle, and when the evaporator and the condenser have a same inclining direction, the evaporator and the condenser are of split structures;
or, the evaporator and the condenser have different inclining directions;
or, the evaporator and the condenser have different inclining angles.

In an embodiment, a communication pipeline for the evaporator and the condenser includes an exhaust pipeline and a return pipeline. A lower end of the exhaust pipeline is connected to an upper end of the evaporator, and an upper end of the exhaust pipeline is connected to an upper end of the condenser, a lower end of the return pipeline is connected to a lower end of the evaporator, and an upper end of the return pipeline is connected to a lower end of the condenser.

In an embodiment, the evaporator includes a stack of multiple sub-evaporators, the condenser includes a stack of multiple sub-condensers, and the sub-evaporators are in communication with the sub-condensers in one-to-one correspondence.

In addition, a phase-change heat exchanger is provided according to the present application, including a housing and a heat exchange core for mounting in the housing. The heat exchange core has a structure in which at least one of the evaporator and the condenser is inclined in the housing. Since the structure, in which at least one of the evaporator and the condenser is inclined in the housing, of the heat exchange core has the above technical effects, the phase-change heat exchanger also has corresponding technical effects, which are not described any more.

In an embodiment, a separation plate is provided in the housing, an inner chamber of the housing is separated by the separation plate into an inner circulation heat exchange chamber and an outer circulation heat exchange chamber that are not in communication with each other, the heat exchange core is mounted in the inner chamber of the housing, the evaporator of the heat exchange core is located in the inner circulation heat exchange chamber, and the condenser of the heat exchange core is located in the outer circulation heat exchange chamber.

### BRIEF DESCRIPTION OF THE DRAWINGS

For more clearly illustrating embodiments of the present application or technical solutions in the conventional technology, the drawing referred to for describing the embodiments or the conventional technology will be briefly described hereinafter. Apparently, the drawings in the following description are only some examples of the present application, and for those skilled in the art, other drawings may be obtained based on the provided drawing without any creative efforts.
FIG. 1 is a schematic perspective view of an evaporator and a condenser of a heat exchange core which are of split structures and in a obtuse angle arrangement according to an embodiment of the present application;
FIG. 2 is a schematic side view of the evaporator and the condenser of the heat exchange core which are of the split structures and in an obtuse angle arrangement according to the embodiment of the present application;
FIG. 3 is a schematic structural view of the evaporator and the condenser of the heat exchange core which are of the split structures and in an obtuse angle arrangement according to the embodiment of the present application mounted in a housing;
FIG. 4 is a schematic perspective view of the evaporator and the condenser of the heat exchange core which are of an integral structure and in an obtuse angle arrangement according to an embodiment of the present application;
FIG. 5 is a schematic side view of the evaporator and the condenser of the heat exchange core which are of the integral structure and in an obtuse angle arrangement according to the embodiment of the present application;
FIG. 6 is a schematic structural view of the evaporator and the condenser of the heat exchange core which are of the integral structure and in an obtuse angle arrangement according to the embodiment of the present application mounted in the housing;
FIG. 7 is a schematic structural view of the condenser of the heat exchange core according to the embodiment of the present application vertically arranged in an outer circulation heat exchange chamber; and
FIG. 8 is a schematic structural view of the evaporator of the heat exchange core according to the embodiment of the present application vertically arranged in an inner circulation heat exchange chamber;
FIG. 9 is a schematic perspective view of an evaporator and a condenser of a heat exchange core which are of the split structures and in an inclining arrangement according to an embodiment of the present application;
FIG. 10 is a schematic side view of the evaporator and the condenser of the heat exchange core which are of the split structures and in an inclining arrangement according to the embodiment of the present application;
FIG. 11 is a schematic structural view of the evaporator and the condenser of the heat exchange core which are of the split structures and in an inclining arrangement according to the embodiment of the present application mounted in a housing;
FIG. 12 is a schematic perspective view of the evaporator and the condenser of the heat exchange core which are of the split structures and in an inclining arrangement according to the embodiment of the present application mounted in a housing.

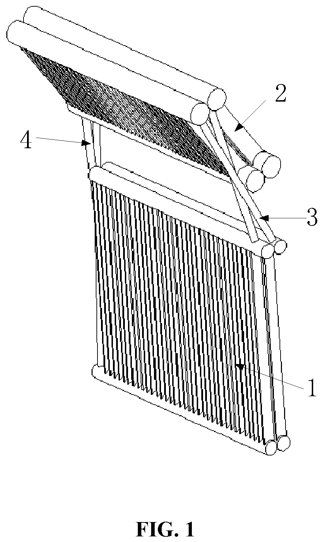

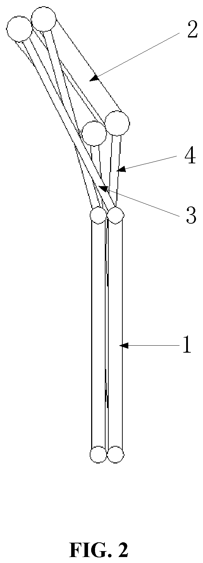

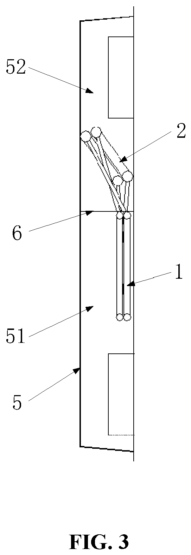

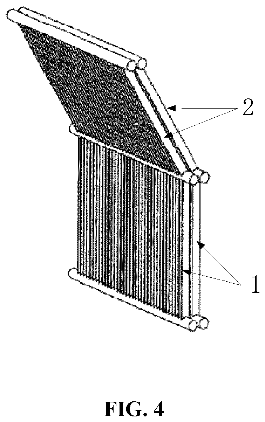

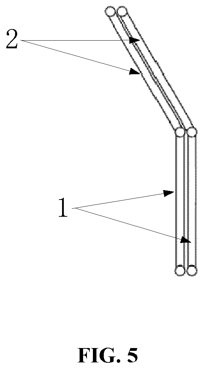

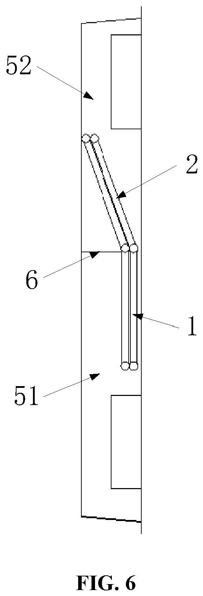

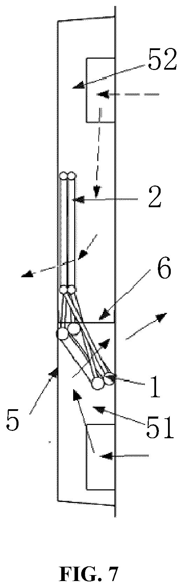

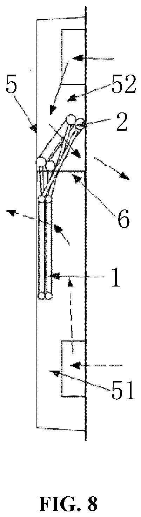

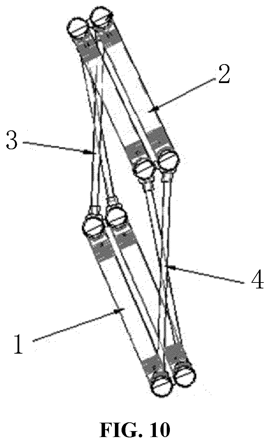

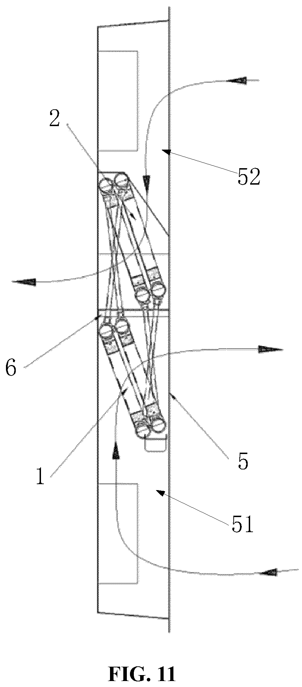

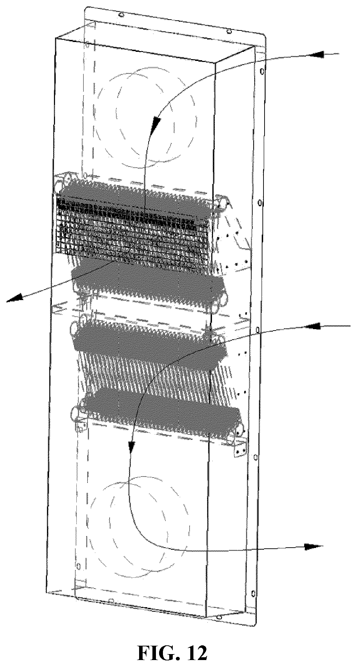

In FIGS. 1 to 12, the arrows connected end to end represent an airflow direction:

| | | | |
|---|---|---|---|
| 1, | evaporator; | 2, | condenser; |
| 3, | exhaust pipe; | 4, | return pipe; |
| 51, | inner circulation heat exchange chamber; | | |
| 52, | outer circulation heat exchange chamber; | | |
| 6, | separation plate. | | |

### DETAILED DESCRIPTION OF THE EMBODIMENTS

A phase-change heat exchanger and a heat exchange core having the phase-change heat exchanger are provided according to the present application, so as to solve the problem of a large overall volume of the phase-change heat exchanger.

Technical solutions of embodiments of the present application are clearly and completely described hereinafter in conjunction with the drawings of the embodiments according to the present application. Apparently, the embodiments described are only some embodiments of the present application, rather than all embodiments. Based on the embodiments in the present application, all of the other embodiments which are obtained by those skilled in the art without any creative work fall within the protection scope of the present application.

Referring to FIGS. 1 to 8, a heat exchange core of a phase-change heat exchanger includes an evaporator 1 and a condenser 2 which is in communication with the evaporator 1 and is located above the evaporator 1, and a preset obtuse angle is formed between the evaporator 1 and the condenser 2.

In the heat exchange core of the phase-change heat exchanger, in practical application, by designing the preset obtuse angle between the evaporator 1 and the condenser 2 of the heat exchange core, a space in a thickness direction of an inner chamber of a housing 5 of the phase-change heat exchanger can be fully utilized, a span in a connection direction between the evaporator 1 and the condenser 2 can be reduced, and thus an overall volume of the phase-change heat exchanger can be reduced.

It should be noted that those skilled in the art should be able to understand the basic structure and working principle of the heat exchange core of the phase-change heat exchanger is that: the heat exchange core includes the evaporator 1 and the condenser 2, and the condenser 2 is located above the evaporator 1 (the upper here should be understood as a broad orientation limitation, for example, it can be obliquely above or directly above), and the phase-change working medium inside the evaporator 1 flows to the condenser after heat absorption and vaporization, the vaporized phase-change working medium dissipates heat in condenser 2, and the phase-change working medium returns to the evaporator 1 under the action of gravity after being condensed into liquid, in this way, circulating heat dissipation is achieved.

In some specific embodiments, the preset obtuse angle ranges from 100 ° to 170 °. It should be understood that the value range of the angle is only the range listed by the technical solution of the present application to meet the mounting requirements of the heat exchange core in most phase-change heat exchangers. In the practical application, other values of the obtuse angle can be selected according to the actual needs, which is not specifically limited herein.

In some specific embodiments, the above evaporator 1 and condenser 2 can be specifically designed into an integral structure or split structures. The evaporator 1 and the condenser 2 are designed into an integral structure, so that the mounting is relatively convenient when the heat exchange core is mounted into the inner chamber of the housing 5 of the phase-change heat exchanger, and the disadvantage thereof is apparent, that is, the arrangement angle between the evaporator 1 and the condenser 2 is not adjustable, and can only be pre-processed into the corresponding size during the production and manufacturing. Alternatively, the evaporator 1 and the condenser 2 are designed into split structures, the advantage thereof is that the mounting can be adaptively adjusted according to the actual mounting space of the inner chamber of the housing 5, and the arrangement angle between the evaporator 1 and the condenser 2 is adjustable, which can better adapt to the housings of different thicknesses and sizes, with stronger applicability, while the disadvantage thereof is that the mounting is relatively complicated. In the practical application, the corresponding structural form can be selected according to the actual needs, which is not specifically limited herein.

In some specific embodiments, the specific structural form of the movable connection with split structures between the evaporator 1 and the condenser 2 can be that opposite ends of the evaporator 1 and the condenser 2 are hinged, and the evaporator 1 is in communication with the condenser 2 through a hose. With the structural form of hinged connection, the preset obtuse angle between the evaporator 1 and the condenser 2 can be adjusted according to actual needs, and the adjustment is relatively convenient.

It can be understood that in the practical application, the hinged connection between the evaporator 1 and the condenser 2 can further be provided with a corresponding limiting structure. For example, a hinged shaft is fixedly arranged on one of the evaporator 1 and the condenser 2, and the other one of the evaporator 1 and the condenser 2 is provided with a shaft sleeve that rotates together with the hinged shaft, an arc sliding groove that rotates by a certain angle along the hinged shaft is defined on the shaft sleeve, and the hinged shaft is provided with a limiting stop that is in a sliding fit with the sliding groove. When the limiting stop rotates to two limiting positions of the arc sliding groove, corresponding angles are two limiting angles of the evaporator 1 and the condenser 2. In order to facilitate mounting, the hinged connection between the evaporator 1 and the condenser 2 can be designed as a rotary connection with a certain damping force, which is relatively convenient to keep them at a preset angle.

It should be noted that, the above way of rotation fit with a damping force to achieve angle positioning is only an example of the embodiment of the present application. In the practical application process, other angle positioning ways commonly used by those skilled in the art can also be designed, for example, corresponding positioning discs are arranged on the two components that are hinged to achieve rotation, multiple positioning holes are defined on the positioning discs, and the angle can be locked by the positioning pin passing into the positioning discs. In the practical application, the angle positioning way can be set according to the actual needs, which is not specifically limited herein.

In some specific embodiments, a communication pipeline between the evaporator 1 and the condenser 2 includes an exhaust pipe 3 and a return pipe 4, a lower end of the exhaust pipe 3 is connected to an upper end of the evaporator 1, an upper end of the exhaust pipe 3 is connected to an upper end of the condenser 2; a lower end of the return pipe 4 is connected to a lower end of the evaporator 1, and an upper end of the return pipe 4 is connected to a lower end of the condenser 2. By designing such a structural form, the heat absorption and heat release of the phase-change medium are more sufficient.

In some specific embodiments, the evaporator 1 includes a stack of multiple sub-evaporators, the condenser 2 includes a stack of multiple sub-condensers, and the sub-evaporators are in communication with the sub-condensers in one-to-one correspondence. By designing such a structural form, the heat exchange core has multiple heat exchange cycle units, and the contact area with the heat exchange environment is increased, and the heat exchange efficiency is increased.

In a further embodiment, the correspondence way of the sub-evaporators and the sub-condensers can be a staggered communication way. For example, the evaporator 1 has a stack of two sub-evaporators, and the condenser 2 has a stack of two sub-condensers. With a stacking direction of a same side as the reference, the upper sub-evaporator is in communication with the lower sub-condenser, and the lower sub-evaporator is in communication with the upper sub-condenser. By designing such a structural form, the heat exchange circulation unit formed by each group of sub-evaporators and sub-condensers has certain structural constraints, and thus the structure of the entire heat exchange core is more and more stable and reliable.

In addition, a phase-change heat exchanger is provided according to the present application, which includes a heat exchange core, the heat exchange core is the heat exchange core of the phase-change heat exchanger according to any one of above solutions. Since the heat exchange core of the phase-change heat exchanger has the aforementioned technical effects, the phase-change heat exchanger with the heat exchange core should also have the corresponding technical effects, which is not described here.

In some specific embodiments, the phase-change heat exchanger may include a housing 5, a separation plate 6 is provided in the housing 5, an inner chamber of the housing 5 is separated by the separation plate into an inner circulation heat exchange chamber 51 and an outer circulation heat exchange chamber 52 that are not in communication with each other, the heat exchange core is mounted in the inner chamber of the housing, the evaporator 1 of the heat exchange core is located in the inner circulation heat exchange chamber 51, and the condenser 2 of the heat exchange core is located in the outer circulation heat exchange chamber 52. It should be noted that the inner circulation heat exchange chamber 51 and the outer circulation heat exchange chamber 52 generally have an air inlet side and an air outlet side, the air inlet side is provided with a corresponding air inlet, and the air outlet side is provided with a corresponding air outlet. The heat in the inner circulation heat exchange chamber 51 can be transferred to the outer circulation heat exchange chamber 52 through the heat exchange core, so as to realize the heat dissipation of the target space and devices.

In some specific embodiments, the inner circulation heat exchange chamber 51 and the outer circulation heat exchange chamber 52 can be designed to be arranged sequentially from bottom to top, the evaporator 1 can be designed to be vertically arranged in the inner circulation heat exchange chamber 51. Since the preset obtuse angle is formed between the evaporator 1 and the condenser 2, the condenser 2 located above the evaporator 1 is arranged obliquely. It can be understood that in the practical application, the condenser 2 can also be designed to be vertically arranged in the outer circulation heat exchange chamber 52, and the evaporator 1 is obliquely arranged in the inner circulation heat exchange chamber 51. In the practical application, the design can be selected according to the specific layout requirements, which is not specifically limited herein.

In some specific embodiments, the condenser 2 is arranged close to the air outlet side of the outer circulation heat exchange chamber 52 in a case that the condenser 2 is vertically arranged in the outer circulation heat exchange chamber 52. This arrangement can prolong the contact time between the condenser 2 and the cold air of the external environment as much as possible, and is beneficial to improving the working efficiency of the condenser 2.

In some specific embodiments, the evaporator 1 is arranged close to the air outlet side of the inner circulation heat exchange chamber 51 in a case that the evaporator 1 is vertically arranged in the inner circulation heat exchange chamber 51. This arrangement can prolong the contact time between the evaporator 1 and the hot air of the inner circulation heat exchange chamber as much as possible, and is beneficial to improving the working efficiency of the evaporator 1.

It should be noted that the inner circulation heat exchange chamber and the outer circulation heat exchange chamber are arranged from bottom to top, which is only an example of the embodiment of the present application. In the practical application, other layout can be selected and designed according to the actual layout requirements. For example, the inner circulation heat exchange chamber 51 and the outer circulation heat exchange chamber 52 are arranged from left to right, and the evaporator 1 is horizontally arranged in the inner circulation heat exchange chamber 51, the corresponding condenser 2 is obliquely arranged in the outer circulation heat exchange chamber 52; or the condenser 2 is horizontally arranged in the outer circulation heat exchange chamber 52, the evaporator 1 is obliquely arranged in the inner circulation heat exchange chamber 51. In the practical application, the layout can be selected according to actual needs, which is not specifically limited herein.

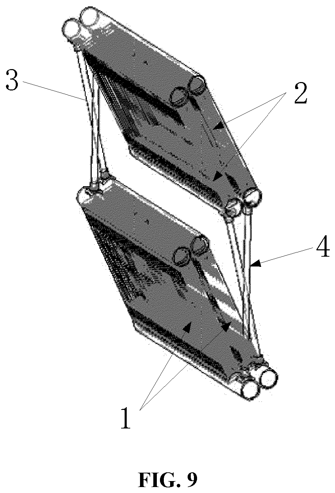

In addition, referring to FIG. 9 to FIG. 12, another heat exchange core for mounting into a housing 5 of a phase-change heat exchanger is provided according to the present application. The heat exchange core includes an evaporator 1 and a condenser 2 which is in communication with the evaporator 1 and is located above the evaporator 1. At least one of the evaporator 1 and the condenser 2 is inclined in the housing 5.

In the actual use, since at least one of the evaporator 1 and the condenser 2 is inclined in the housing, a space in a thickness direction of an inner chamber of a housing 5 of the phase-change heat exchanger can be fully utilized, a span in a connection direction between the evaporator 1 and the condenser 2 can be reduced, and thus an overall volume of the phase-change heat exchanger can be reduced.

In an embodiment, referring to FIG. 9 to FIG. 12, both of the evaporator 1 and the condenser 2 are inclined in the housing 5. In this way, on one hand, an overall volume of the phase-change heat exchanger can be reduced, on the other hand, that the condenser 2 is inclined in a certain angle can allow the outer circulation cooling wind for the phase-change heat exchanger to directly blow onto fins of the condenser 2, which facilitates improving the heat exchanging efficiency; that the evaporator 1 is inclined in a certain angle can allow the outer circulation cooling wind for the phase-change heat exchanger to directly blow onto fins of the evaporator 1, which also facilitates improving the heat exchanging efficiency.

It should be noted that, when the evaporator 1 and the condenser 2 are inclined in the housing, the evaporator 1 and the condenser 2 may be an integral structure or split structures.

In an embodiment, the evaporator and the condenser may have a same inclining direction, or have a same inclining angle, or, have a same inclining direction and have a same inclining angle. When the evaporator and the condenser have a same inclining direction, the evaporator and the condenser are of split structures. Preferably, the evaporator and the condenser have a same inclining direction and have a same inclining angle are adopted in the present application. The specific structure can make reference to FIG. 9 to FIG. 12. This specific structure, on one hand, is easy to be mounted, one the other hand, the spaces of the evaporator 1 and the condenser 2 in a thickness direction of an inner chamber of a housing 5 can be fully utilized and an overall volume of the phase-change heat exchanger can be reduced. Certainly, in practical application, the evaporator 1 and the condenser 2 may have different inclining directions, for example, the inclining direction of the evaporator 1 relates to the wind channel structure of the evaporator 1, and the inclining direction of the condenser 2 relates to the wind channel structure of the condenser 2, and when the evaporator 1 and the condenser 2 have different inclining directions, the evaporator 1 and the condenser 2 may be of an integral structure, or of split structures. The evaporator 1 and the condenser 2 may have difference inclining angles, and in practical application, the difference inclining angles can be set according to actual requirement, which is not limited here.

In an embodiment, when at least one of the evaporator 1 and the condenser 2 is inclined in the housing 5, a communication pipeline for the evaporator 1 and the condenser 2 may include an exhaust pipeline 3 and a return pipeline 4. A lower end of the exhaust pipeline 3 is connected to an upper end of the evaporator, and an upper end of the exhaust pipeline 3 is connected to an upper end of the condenser, a lower end of the return pipeline 4 is connected to a lower end of the evaporator, and an upper end of the return pipeline 4 is connected to a lower end of the condenser.

In an embodiment, the evaporator 1 includes a stack of multiple sub-evaporators, the condenser 2 includes a stack of multiple sub-condensers, and the sub-evaporators are in communication with the sub-condensers in one-to-one correspondence. Through the above structure, the heat exchange core has multiple heat exchange circulation unit, which increases the contacting area with environment, and further improves the heat exchange efficiency.

In an embodiment, the multiple sub-condensers and the multiple sub-evaporators may be communicated with each other in a staggered manner. For example, the evaporator 1 has two-layer stacked sub-evaporators, and the condenser 2 has two-layer stacked sub-condensers. Based on the stacking direction at a same side, the sub-evaporator at an upper layer is communicated with the sub-condenser at a lower layer, and the sub-evaporator at a lower layer is communicated with the sub-condenser at an upper layer. This structure may have a certain structural limiting function for each unit of the sub-evaporator and the sub-condenser, which may make the entire structure of heat exchanger core relatively stable.

In addition, a phase-change heat exchanger is provided according to the present application, including a housing 5 and a heat exchange core for mounting in the housing 5. The heat exchange core has a structure in which at least one of the evaporator 1 and the condenser 2 is inclined in the housing. Since the structure, in which at least one of the evaporator 1 and the condenser 2 is inclined in the housing, of the heat exchange core has the above technical effects, the phase-change heat exchanger also has corresponding technical effects, which are not described any more.

In an embodiment, when the a separation plate 6 is provided in the housing 5, an inner chamber of the housing 5 is separated by the separation plate 6 into an inner circulation heat exchange chamber 51 and an outer circulation heat exchange chamber 52 that are not in communication with each other. The inner circulation heat exchange chamber 51 and the outer circulation heat exchange chamber 52 are arranged from bottom to top. The evaporator 1 is arranged on the air flow path of the inner circulation heat exchange chamber 51, and the condenser 2 is arranged on the air flow path of the outer circulation heat exchange chamber 52. It should be noted that, both of the inner circulation heat exchange chamber 51 and the outer circulation heat exchange chamber 52 have an air inlet side and an air outlet side. The inlet side has an air inlet port, and the air outlet side has an air outlet port. Heat in the inner circulation heat exchange chamber 51 is delivered to the outer circulation heat exchange chamber 52 through the heat exchange core, finally, heat dissipation for target space and elements are realized.

In addition, it should be noted that embodiments in this specification are described in a progressive manner, each of the embodiments emphasizes differences from other embodiments, and the same or similar parts among the embodiments can be referred to each other.

It should be understood that if "system", "device", "unit" and/or "module" are used herein, it is merely a method for distinguishing different components, elements, components, parts or assemblies at different levels. However, if other words serve the same object, they may be replaced by other expressions.

As shown in the present application and the claims, the words "one", "a", "one type" and/or "this" do not specifically refer to the singular, but may also include the plural, unless the context clearly indicates exceptions. Generally speaking, the terms "include" and "comprise" only indicate that the steps and elements that have been clearly identified are included, and these steps and elements do not constitute an exclusive list. Methods or equipment may also contain other steps or elements. The statement "comprising (including) a..." does not exclude the case that other identical elements exist in the process, method, product or device.

In the description of the embodiments of the present application, unless otherwise specified, "/" means or, for example, A/B can mean A or B; the "and/or" herein is only an association relationship that describes the associated objects, which means that there can be three kinds of relationships, for example, A and/or B means that there are three cases: A alone, A and B at the same time, and B alone. In addition, in the description of the embodiments of the present application, "multiple" refers to two or more.

The terms "first", "second" and the like are for purpose of description, and should not be interpreted as indicating or implying relative importance or implying the number of the indicated technical features. Therefore, the features defined by "first" and "second" may explicitly or implicitly include one or more of the features.

If a flowchart is used in the present application, the flowchart is used to explain the operation performed by the system according to the embodiment of the present application. It should be understood that the preceding or subsequent operations are not necessarily performed accurately in sequence. Instead, the steps can be processed in reverse order or simultaneously. In addition, other operations can be added to these procedures, or one or more operations can be removed from these procedures.

The principle and the embodiments of the present application are illustrated herein by specific examples. The above description of the examples is only intended to facilitate the understanding of the concept of the present application. It should be noted that, for the person skilled in the art, many modifications and improvements may be made to the present application without departing from the protection scope of the present application defined by the claims.

## Claims

1. A phase-change heat exchanger, comprising a heat exchange core,
wherein the heat exchange core comprises an evaporator (1) and a condenser (2) which is in communication with the evaporator (1) and is located above the evaporator (1), wherein a preset obtuse angle is formed between the evaporator (1) and the condenser (2), **characterised in that** the phase-change heat exchange further comprises a housing (5), and **in that**
a separation plate (6) is provided in the housing (5), an inner chamber of the housing (5) is separated by the separation plate (6) into an inner circulation heat exchange chamber (51) and an outer circulation heat exchange chamber (52) that are not in communication with each other, the heat exchange core is mounted in the inner chamber of the housing, the evaporator (1) of the heat exchange core is located in the inner circulation heat exchange chamber (51), and the condenser (2) of the heat exchange core is located in the outer circulation heat exchange chamber (52),
wherein the inner circulation heat exchange chamber (51) and the outer circulation heat exchange chamber (52) are arranged sequentially from bottom to top, and the evaporator (1) is vertically arranged in the inner circulation heat exchange chamber (51) or the condenser (2) is vertically arranged in the outer circulation heat exchange chamber (52).

2. The phase-change heat exchanger according to claim 1, wherein the preset obtuse angle ranges from 100 ° to 170 °.

3. The phase-change heat exchanger according to claim 1, wherein the evaporator (1) and the condenser (2) are of split structures which are in a movable connection.

4. The phase-change heat exchanger according to claim 1, wherein a communication pipeline between the evaporator (1) and the condenser (2) comprises an exhaust pipe (3) and a return pipe (4), a lower end of the exhaust pipe (3) is connected to an upper end of the evaporator (1), an upper end of the exhaust pipe (3) is connected to an upper end of the condenser (2); a lower end of the return pipe (4) is connected to a lower end of the evaporator (1), and an upper end of the return pipe (4) is connected to a lower end of the condenser (2).

5. The phase-change heat exchanger according to claim 1, wherein the evaporator (1) comprises a stack of a plurality of sub-evaporators, the condenser (2) comprises a stack of a plurality of sub-condensers, and the sub-evaporators are in communication with the sub-condensers in one-to-one correspondence.

6. The phase-change heat exchanger according to claim 1, wherein the condenser (2) is arranged close to an air outlet side of the outer circulation heat exchange chamber (52) in a case that the condenser (2) is vertically arranged in the outer circulation heat exchange chamber (52).

7. The phase-change heat exchanger according to claim 1, wherein the evaporator (1) is arranged close to an air outlet side of the inner circulation heat exchange chamber (51) in a case that the evaporator (1) is vertically arranged in the inner circulation heat exchange chamber (51).

8. The phase-change heat exchanger according to claim 1, wherein the inner circulation heat exchange chamber (51) and the outer circulation heat exchange chamber (52) are arranged from left to right, and the evaporator (1) is horizontally arranged in the inner circulation heat exchange chamber (51) or the condenser (2) is horizontally arranged in the outer circulation heat exchange chamber (52).

## Patentansprüche

1. Phasenwechselwärmetauscher, umfassend einen Wärmetauschkern, wobei der Wärmetauschkern einen Verdampfer (1) und einen Kondensator (2) umfasst, der mit dem Verdampfer (1) in Kommunikation steht und sich oberhalb des Verdampfers (1) befindet, wobei zwischen dem Verdampfer (1) und dem Kondensator (2) ein vorgegebener stumpfer Winkel gebildet ist, **dadurch gekennzeichnet, dass** der Phasenwechselwärmetauscher ferner ein Gehäuse (5) umfasst und dass in dem Gehäuse (5) eine Trennplatte (6) bereitgestellt ist, ein Innenraum des Gehäuses (5) durch die Trennplatte (6) in eine innere Zirkulationswärmetauschkammer (51) und eine äußere Zirkulationswärmetauschkammer (52) getrennt ist, die nicht miteinander in Kommunikation stehen, der Wärmetauschkern in dem Innenraum des Gehäuses montiert ist, der Verdampfer (1) des Wärmetauschkerns sich in der inneren Zirkulationswärmetauschkammer (51) befindet und der Kondensator (2) des Wärmetauschkerns sich in der äußeren Zirkulationswärmetauschkammer (52) befindet,
wobei die innere Zirkulationswärmetauschkammer (51) und die äußere Zirkulationswärmetauschkammer (52) nacheinander von unten nach oben angeordnet sind und der Verdampfer (1) vertikal in der inneren Zirkulationswärmetauschkammer (51) angeordnet ist oder der Kondensator (2) vertikal in der äußeren Zirkulationswärmetauschkammer (52) angeordnet ist.

2. Phasenwechselwärmetauscher nach Anspruch 1, wobei der vorgegebene stumpfe Winkel im Bereich von 100° bis 170° liegt.

3. Phasenwechselwärmetauscher nach Anspruch 1, wobei der Verdampfer (1) und der Kondensator (2) geteilte Strukturen aufweisen, die in einer beweglichen Verbindung stehen.

4. Phasenwechselwärmetauscher nach Anspruch 1, wobei eine Kommunikationsleitung zwischen dem Verdampfer (1) und dem Kondensator (2) ein Abgasrohr (3) und ein Rücklaufrohr (4) umfasst, ein unteres Ende des Abgasrohrs (3) mit einem oberen Ende des Verdampfers (1) verbunden ist, ein oberes Ende des Abgasrohrs (3) mit einem oberen Ende des Kondensators (2) verbunden ist; ein unteres Ende des Rücklaufrohrs (4) mit einem unteren Ende des Verdampfers (1) verbunden ist und ein oberes Ende des Rücklaufrohrs (4) mit einem unteren Ende des Kondensators (2) verbunden ist.

5. Phasenwechselwärmetauscher nach Anspruch 1, wobei der Verdampfer (1) einen Stapel von einer Vielzahl von Unterverdampfern umfasst, der Kondensator (2) einen Stapel von einer Vielzahl von Unterkondensatoren umfasst und die Unterverdampfer in einer Eins-zu-Eins-Entsprechung in Kommunikation mit den Unterkondensatoren stehen.

6. Phasenwechselwärmetauscher nach Anspruch 1, wobei der Kondensator (2) nahe einer Luftauslassseite der äußeren Zirkulationswärmetauschkammer (52) angeordnet ist, wenn der Kondensator (2) vertikal in der äußeren Zirkulationswärmetauschkammer (52) angeordnet ist.

7. Phasenwechselwärmetauscher nach Anspruch 1, wobei der Verdampfer (1) nahe einer Luftauslassseite der inneren Zirkulationswärmetauschkammer (51) angeordnet ist, wenn der Verdampfer (1) vertikal in der inneren Zirkulationswärmetauschkammer (51) angeordnet ist.

8. Phasenwechselwärmetauscher nach Anspruch 1, wobei die innere Zirkulationswärmetauschkammer (51) und die äußere Zirkulationswärmetauschkammer (52) von links nach rechts angeordnet sind und der Verdampfer (1) horizontal in der inneren Zirkulationswärmetauschkammer (51) angeordnet ist oder der Kondensator (2) horizontal in der äußeren Zirkulationswärmetauschkammer (52) angeordnet ist.

## Revendications

1. Échangeur de chaleur à changement de phase, comprenant un noyau d'échange de chaleur, dans lequel le noyau d'échange de chaleur comprend un évaporateur (1) et un condenseur (2) qui est en communication avec l'évaporateur (1) et est situé au-dessus de l'évaporateur (1), dans lequel un angle obtus prédéfini est formé entre l'évaporateur (1) et le condenseur (2), **caractérisé en ce que** l'échange de chaleur à changement de phase comprend en outre un boîtier (5), et **en ce que**
une plaque de séparation (6) est prévue dans le boîtier (5), une chambre intérieure du boîtier (5) est séparée par la plaque de séparation (6) en une chambre d'échange de chaleur à circulation intérieure (51) et une chambre d'échange de chaleur à circulation extérieure (52) qui ne sont pas en communication l'une avec l'autre, le noyau d'échange de chaleur est monté dans la chambre intérieure du boîtier, l'évaporateur (1) du noyau d'échange de chaleur est situé dans la chambre d'échange de chaleur à circulation intérieure (51), et le condenseur (2) du noyau d'échange de chaleur est situé dans la chambre d'échange de chaleur à circulation extérieure (52),
dans lequel la chambre d'échange de chaleur à circulation intérieure (51) et la chambre d'échange de chaleur à circulation extérieure (52) sont disposées séquentiellement de bas en haut, et l'évaporateur (1) est disposé verticalement dans la chambre d'échange de chaleur à circulation intérieure (51) ou le condenseur (2) est disposé verticalement dans la chambre d'échange de chaleur à circulation extérieure (52).

2. Échangeur de chaleur à changement de phase selon la revendication 1, dans lequel l'angle obtus prédéfini est compris entre 100° et 170°.

3. Échangeur de chaleur à changement de phase selon la revendication 1, dans lequel l'évaporateur (1) et le condenseur (2) sont des structures divisées qui sont en liaison mobile.

4. Échangeur de chaleur à changement de phase selon la revendication 1, dans lequel une canalisation de communication entre l'évaporateur (1) et le condenseur (2) comprend un tuyau d'échappement (3) et un tuyau de retour (4), une extrémité inférieure du tuyau d'échappement (3) étant reliée à une extrémité supérieure de l'évaporateur (1), une extrémité supérieure du tuyau d'échappement (3) étant reliée à une extrémité supérieure du condenseur (2) ; une extrémité inférieure du tuyau de retour (4) étant reliée à une extrémité inférieure de l'évaporateur (1), et une extrémité supérieure du tuyau de retour (4) étant reliée à une extrémité inférieure du condenseur (2).

5. Échangeur de chaleur à changement de phase selon la revendication 1, dans lequel l'évaporateur (1) comprend un empilement d'une pluralité de sous-évaporateurs, le condenseur (2) comprend un empilement d'une pluralité de sous-condenseurs, et les sous-évaporateurs sont en communication avec les sous-condenseurs dans une correspondance biunivoque.

6. Échangeur de chaleur à changement de phase selon la revendication 1, dans lequel le condenseur (2) est disposé à proximité d'un côté de sortie d'air de la chambre d'échange de chaleur à circulation extérieure (52) dans un cas où le condenseur (2) est disposé verticalement dans la chambre d'échange de chaleur à circulation extérieure (52).

7. Échangeur de chaleur à changement de phase selon la revendication 1, dans lequel l'évaporateur (1) est disposé à proximité d'un côté de sortie d'air de la chambre d'échange de chaleur à circulation intérieure (51) dans un cas où l'évaporateur (1) est disposé verticalement dans la chambre d'échange de chaleur à circulation intérieure (51).

8. Échangeur de chaleur à changement de phase selon la revendication 1, dans lequel la chambre d'échange de chaleur à circulation intérieure (51) et la chambre d'échange de chaleur à circulation extérieure (52) sont disposées de gauche à droite, et l'évaporateur (1) est disposé horizontalement dans la chambre d'échange de chaleur à circulation intérieure (51) ou le condenseur (2) est disposé horizontalement dans la chambre d'échange de chaleur à circulation extérieure (52).
